# NEUE EUROPÄISCHE PATENTSCHRIFT

(11) **EP 0 595 149 B2**
(45) Veröffentlichungstag und Bekanntmachung des Hinweises auf die Entscheidung über den Einspruch: **02.05.2007**
(45) Hinweis auf die Patenterteilung: 18.08.1999
(21) Anmeldenummer: 93116786.0
(22) Anmeldetag: 18.10.1993
(51) Int. Cl.: C08G 18/08, C08G 18/44, D06N 3/14, C14C 11/00, D21H 19/62, C09D 175/04

(54) **Verwendung wässriger Beschichtungsmittel zur Erzeugung wasserdampfdurchlässiger Beschichtungen**
Use of aqueous coating composition for the preparation of water vapour-permeable coatings
Utilisation des compositions aqueuses de revêtement pour la préparation de revêtements perméables à la vapeur d'eau

(30) Priorität: 29.10.1992 DE 4236569
(43) Veröffentlichungstag der Anmeldung: 04.05.1994
(73) Patentinhaber: BAYER AG, 51368 Leverkusen (DE)
(72) Erfinder: Schütze, Detlef-Ingo, Dr., D-51061 Köln (DE); Thoma, Wilhelm, Dr., D-51381 Leverkusen (DE); Nachtkamp, Klaus, Dr., D-40593 Düsseldorf (DE); Pedain, Josef, Dr., D-51061 Köln (DE); Schmitz, Reinold, Dr., D-51519 Odenthal (DE)

(56) Entgegenhaltungen:
- EP-A- 0 000 347
- EP-A- 0 011 162
- FR-A- 2 342 340
- FR-A- 2 376 168
- W. Schroeer et al, Wasserdampfdurchlaessige kompakte Textilbeschichtungen mit Polyurethanen, Coating 25 (9/92), S. 290-296

## Beschreibung

Die Erfindung betrifft für die Beschichtung von Substraten, insbesondere von flexiblen Substraten wie textilen Flächengebilden durch Verwendung geeignete Mittel aus A) Polyurethan mit hydrophilen Gruppen und B) wäßriger Phase.

Der Begriff "Polyurethane" im Sinne der Erfindung umfaßt auch Polyurethanharnstoffe.

Beschichtungen mit hoher Wasserdampfdurchlässigkeit sind in der Vergangenheit immer wieder das Ziel von Untersuchungen und Entwicklungen gewesen, da nur sie sich z.B. für die Herstellung hochwertiger Ledersubstitute oder für Bekleidungsstücke mit hohem Tragekomfort eignen.

Da Tauchbad- und Verdampfungskoagulation, Einarbeitung und nachträgliches Auswaschen wasserlöslicher Salze ebenso wie die Perforation mit Hilfe energiereicher Elektronenstrahlen Mikrokanäle bzw. Mikrokavitationen in der Beschichtung erzeugen und diese damit schwächen, ist man besonders an porenfreien wasserdampfdurchlässigen Beschichtungen interessiert.

Die meisten für Beschichtungsmittel verwendeten Polyurethane werden in organischen Lösungsmitteln gelöst oder dispergiert. Der Trend zu lösungsmittelarmen bzw. lösungsmittelfreien Beschichtungsmitteln begünstigt aber wäßrige Beschichtungssysteme. Polyurethane, die aufgrund hydrophiler Gruppen selbstemulgierend sind und deshalb auch ohne Zuhilfenahme externer Emulgatoren in Wasser dispergiert werden können, sind bekannt; vgl. DE-PS 2 446 440, 2 551 094, 2 651 505, 2 651 506, 2 659 617 (≙ FR-A-2 376 168) und DE-OS 2 816 815. Eine optimale Kombination aus Dispergierbarkeit des Polyurethans in Wasser und hoher Wasserdampfdurchlässigkeit bei gleichzeitig ausreichender Naßechtheit der Beschichtungen - wie sie für Beschichtungsmittel zur Herstellung wasserdampfdurchlässiger Beschichtungen gefordert wird - ist allerdings bis jetzt nicht verfügbar gewesen.

Überraschenderweise wurde nun gefunden, daß man äußerst wasserdampfdurchlässige Beschichtungen mit sehr geringer Wasserquellneigung herstellen kann, wenn man als Beschichtungsmittel Systeme verwendet, die
A. Polyurethan mit ionischen Gruppen und mit Polyethylenoxideinheiten, die nach Menge und Sequenzlänge definiert sind, und
B. eine wäßrige Phase enthalten.

Gegenstand der Erfindung sind die Verwendung wäßriger Dispersionen aus
A) einem Polyurethan auf Basis von Polyisocyanat, Diol mit mittleren Molekulargewichten von 350 bis 5000 und Kettenverlängerungsmittel mit Molekulargewichten von 32 bis 349, wobei das Polyurethan A) ionische Gruppen in einer Menge von 0,1 bis 75 meq pro 100 g Polyurethan A) und über 6 bis 50 Gew.-%, bezogen auf Polyurethan A), in die Hauptkette eingebaute Polyethylenoxideinheiten (-CH₂-CH₂O)ₙ- mit einer Sequenzlänge n von 3 bis 50 enthält, und
B) wäßriger Phase in einer Menge von 30 bis 80 Gew.-%, bezogen auf die Summe A+B,
zur Erzeugung porenfreier wasserdampfdurchlässiger Beschichtungen auf Textilien, Leder oder Papier.

Der Begriff "in die Hauptkette eingebaut" im Sinne dieser Erfindung bedeutet für die Polyethylenoxideinheiten, daß sie nicht das Ende einer Kette darstellen, sondern nach beiden Seiten mit Resten verbunden sind, die jeweils noch mindestens eine Urethan- oder Harnstoffgruppe enthalten; "in die Hauptkette eingebaut" steht also im Gegensatz zu dem geläufigen Begriff "end-oder seitenständig".

Der mit den erfindungsgemäß verwendeten Beschichtungsmitteln erzielbare Effekt ist deshalb so überraschend, weil Polyurethane, die entweder die ionischen Gruppen alleine oder die Polyethylenoxideinheiten der anspruchsgemäß definierten Art alleine enthalten, eine praktisch verwertbare Wasserdampfdurchlässigkeit nicht besitzen.

Die in den DE-PS 2 551 094, 2 651 505, 2 651 506, 2 659 617 und in der DE-OS 2 816 815 beschriebenen Polyurethane enthalten end- und/oder seitenständige Polyethylenoxideinheiten. Den erfindungsgemäß gestellten Anforderungen genügen sie nicht.

Die in der DE-PS 2 446 440 beschriebenen Polyurethane enthalten in die Hauptkette eingebaute Einheiten von Sulfonatdiolen, die auch Alkylenoxideinheiten enthalten können, in einer solchen Menge, daß die Polyurethane einen Sulfonatgruppengehalt von 0,1 bis 6 Gew.-% aufweisen.

Unter den üblichen Ausgangskomponenten für die Herstellung der Polyurethane werden in Spalte 9 der DE-PS 2 446 440 auch Polyester - allerdings ohne Mengenangaben - erwähnt. In den Beispielen werden ausschließlich propoxylierte oder Ethergruppen-freie Sulfonatdiole eingesetzt; Sulfonatgruppen-freie Polyetherpolyole werden nicht verwendet. Die DE-PS 2 446 440 konnte deshalb nicht nahelegen, daß für Beschichtungsmittel besonders wertvolle Produkte dann entstehen, wenn man ionische Grupppen und Polyethylenoxideinheiten mit einer Sequenzlänge von 2 bis 50 in einer Menge von über 6 bis 50 Gew.-% in die Polyurethane einbaut. Die DE-PS 2 446 440 erwähnt keine wasserdampfdurchlässigen Beschichtungen und konnte deshalb die Verwendung von Polyurethandispersionen zur Herstellung wasserdampfdurchlässiger Beschichtungen auch nicht nahelegen.

Bei der Herstellung wasserdampfdurchlässiger Beschichtungen hatte der Fachmann insofern eine geistige Hemmschwelle zu überwinden als für sehr wahrscheinlich gehalten werden mußte, daß Beschichtungen auf Basis von Polyurethanen, die nicht nur ionische Gruppen, sondern zusätzlich weitere hydrophile Gruppen (wie Polyethylenoxideinheiten) enthalten, keine brauchbaren Naßechtheiten mehr ergäben. Daß sich Dispergierbarkeit der Polyurethane in Wasser und hohe Wasserdampfdurchlässigkeit und gleichzeitig gute Naßechtheit der daraus hergestellten Beschichtungen überhaupt miteinander vereinen lassen, erscheint auch nachträglich noch außerordentlich überraschend.

Die Polyurethane A) können auf an sich bekannte Weise in der Schmelze oder - vorzugsweise - in einem organischen Lösungsmittel hergestellt werden.

Für den Aufbau dieser Polyurethane A) werden Polyisocyanate der Formel Q(NCO)₂ eingesetzt, wobei Q für einen aliphatischen Kohlenwasserstoffrest mit 4 bis 12 Kohlenstoffatomen, einen cycloaliphatischen Kohlenwasserstoffrest mit 6 bis 25 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 3-Isocyanatomethyl-3,3,5-trimethylcyclohexylisocyanat (Isophorondiisocyanat), 4,4'-Diisocyanatodicyclohexylmethan, 4,4'-Diisocyanato-3,3'-dimethyl-dicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'-, 2,4'- oder 2,2'-Diisocyanatodiphenylmethan bzw. Gemische der Isomeren, 4,4'-Diisocyanatodiphenylpropan-(2,2), p-Xylylen-diisocyanat und α,α,α',α'-Tetramethyl-m- oder -p-xylylen-diisocyanat sowie aus diesen Verbindungen bestehende Gemische.

Es ist selbstverständlich auch möglich, die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden.

Als Reaktionspartner für die Polyisocyanate kommen vor allem Polyhydroxylverbindungen in Frage, die pro Molekül 2 bis 8, vorzugsweise 2 oder 3 Hydroxylgruppen aufweisen und ein (mittleres) Molekulargewicht von bis zu 5 000, vorzugsweise bis zu 2 500, aufweisen. Dabei kommen sowohl niedermolekulare Polyhydroxylverbindungen mit Molekulargewichten von 32 bis 349 als auch höhermolekulare Polyhydroxylverbindungen mit mittleren Molekulargewichten von mindestens 350, vorzugsweise von mindestens 1000, in Betracht, wie sie in den obengenannten Publikationen ausführlich beschrieben sind.

Höhermolekulare Polyhydroxylverbindungen umfassen die in der Polyurethanchemie an sich bekannten Hydroxypolyester, Hydroxypolyether, Hydroxypolythioether, Hydroxypolyacetale, Hydroxypolycarbonate und/oder Hydroxypolyesteramide, vorzugsweise solche mit mittleren Molekulargewichten von 600 bis 4000, besonders bevorzugt solche mit mittleren Molekulargewichten von 800 bis 2500. Polycarbonatpolyole, Polyetherpolyole und Polyesterpolyole sind besonders bevorzugt.

Für den Aufbau der Polyurethane A) geeignete Komponenten zur Einführung der Polyethylenoxideinheiten umfassen Homopolyethylenglykole und Hydroxylendgruppen aufweisende Ethylenoxid-Mischpolyether (vorzugsweise Ethylenoxid/Propylenoxid-Mischether) mit Block- oder statistischer Verteilung mit der Maßgabe, daß die Ethylenoxidsequenzen den anspruchsgemäßen Forderungen genügen, vorzugsweise Polyethercarbonate und Polyetherester auf Basis der obengenannten Homopolyethylenglykole, Ethylenoxid-Mischpolyether oder deren Mischungen mit anderen Polycarbonat- bzw. Polyester-bildenden Polyhydroxylverbindungen. Sofern als Komponenten zur Einführung der Polyethylenoxideinheiten in das Polyurethan A) oder dessen Vorprodukte Mischpolyether oder Polyethercarbonate bzw. Polyetherester auf Basis solcher Mischpolyether eingesetzt werden, so zählen als Polyethylenoxidsequenzen im Sinne der Patentansprüche lediglich die Einheiten, die die anspruchsgemäße Sequenzlänge aufweisen, während solche Polyethylenoxidsequenzen, die eine Sequenzlänge oberhalb oder unterhalb der anspruchsgemäßen Grenzen besitzen, außer Betracht bleiben.

Die optimale Menge der Polyethylenoxid-Einheiten im Polyurethan A) hängt etwas von der Sequenzlänge ab und folgt der Regel, daß bei kurzer Sequenzlänge die Menge etwas höher sein darf und bei hoher Sequenzlänge die Menge etwas niedriger sein kann: Während bei einer Sequenzlänge von 3 der Gehalt des Polyurethans A) an diesen Polyethylenoxideinheiten bis zu 50 Gew.-% betragen kann, ist es empfehlenswert, bei einer Sequenzlänge über 20 den Gehalt des Polyurethans A) an diesen Polyethylenoxideinheiten auf 20 Gew.-% zu begrenzen.

Zur Unterstützung der dispergierenden Wirkung können auch monofunktionelle Polyethylenoxidalkohole (also ethoxylierte einwertige Alkohole oder ethoxylierte Phenole) in Mengen von 0,2 bis 5 Gew.-%, bezogen auf Polyurethan A, in das Polyurethan A eingebaut werden. Man kann, wenn man solche monofunktionelle Polyethylenoxidalkohole in das Polyurethan A einbaut, auf einen Teil der ionischen Gruppen verzichten. Zur Wasserdampfdurchlässigkeit der Beschichtungen tragen diese monofunktionellen Einheiten jedoch kaum bei. Der Anteil solcher monofunktioneller Polyethylenoxideinheiten im Polyurethan A soll, gemessen an der Menge der gesamten eingebauten Polyethylenoxideinheiten, 30, vorzugsweise 20, insbesondere 10 Gew.-% nicht überschreiten. Die besten Ergebnisse erhält man, wenn man auf den Einbau monofunktioneller Polyethylenoxideinheiten völlig verzichtet.

Ausgangskomponenten für die Polyurethane A), die die Polyethylenoxideinheiten liefern, umfassen also vor allem 2 oder 3 Hydroxylgruppen aufweisende Ethylenoxid-Polyether und Ethylenoxid/Propylenoxid-Mischpolyether mit einem überwiegenden Gewichtsanteil an Ethylenoxideinheiten. Reine Ethylenoxid-Polyether sind bevorzugt.

Der Begriff "mittlere Molekulargewichte" im Sinne der Erfindung bedeutet als Zahlenmittel bestimmte Molekulargewichte.

Die Verbindungen, die neben den Komponenten eingesetzt werden, welche die anspruchsgemäß definierten Polyethylenoxideinheiten liefern, können aus den in der Polyurethanchemie üblichen Verbindungen, die mit Isocyanatgruppen zu reagieren vermögen, ausgewählt werden.

Im folgenden werden Polyhydroxylkomponenten beschrieben, die als Polyurethan-Aufbaukomponenten geeignet sind, aber nicht die anspruchsgemäßen Polyethylenoxideinheiten enthalten.

Die in Frage kommenden Hydroxylgruppen aufweisenden Polycarbonate sind durch Reaktion von Kohlesaurederivaten, z.B. Diphenylcarbonat oder Phosgen, mit Diolen erhältlich. Als derartige Diole kommen z.B. Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A in Frage. Vorzugsweise enthält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-AS 17 70 245, oder durch Veretherung von Hexandiol mit sich selbst zum Di-oder Trihexylenglykol erhalten wurden. Die Herstellung solcher Derivate ist z.B. aus der DE-AS 1 570 540 bekannt. Auch die in der DE-OS 37 17 060 beschriebenen Polyether-Polycarbonatdiole können sehr gut eingesetzt werden.

Die Hydroxylpolycarbonate sollen im wesentlichen linear sein. Sie können jedoch gewünschtenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit und Sorbit, Methylglykosid, 1,4,3,6-Dianhydrohexite.

Als Polyetherpolyole geeignet sind die in der Polyurethanchemie an sich bekannten Polyether, wie z.B. die unter Verwendung von zweiwertigen Startermolekülen, wie Wasser, den obengenannten Diolen oder 2 NH-Bindungen aufweisenden Aminen hergestellten Additions- bzw. Mischadditionsverbindungen des Tetrahydrofurans, Styroloxids, Propylenoxids, der Butylenoxide oder des Epichlorhydrins, insbesondere des Propylenoxids.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt:
Bernsteinsäure, Adipinsäure, Korksäure, Azeleinsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen z.B. Ethylenglykol, Propandiol-(1,2) und -(1,3), Butandiol-(1,4) und -(2,3), Hexandiol-(1,6), Octandiol-(1,8), Neopentylglykol, Cyclohexandimethanol (1,4-Bis-hydroxymethyl-cyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Dipropylenglykol, Dibutylenglykol und Polybutylenglykole in Frage.

Besonders bevorzugt sind auch Mischungen der obengenannten Polyetherpolyole mit Polycarbonatpolyolen und/oder Polyesterpolyolen mit mittleren Molekulargewichten von 1000 bis 3000 aus Adipinsäure, Hexandiol1,6 und Neopentylglykol.

Als weitere Aufbaukomponenten zur Herstellung der Polyurethane A) kommen insbesondere Kettenverlängerer mit Molekulargewichten von 32 bis 299, die 1-4 Hydroxyl- und/oder Aminogruppen aufweisen, in Betracht.

Niedermolekulare Polyhydroxylverbindungen ("Kettenverlängerungsmittel") umfassen die verschiedenartigsten Diole, wie beispielsweise
a) Alkandiole wie Ethylenglykol, Propandiol-1,2 und -1,3, Butandiol-1,4, Pentandiol-1,5, Dimethylpropandiol-1,3 und Hexandiol-1,6;
b) Etherdiole wie Diethylenglykol, Triethylenglykol oder Hydrochinondihydroxyethylether;
c) Esterdiole der allgemeinen Formeln

   HO-(CH₂)ₓ-CO-O-(CH₂)_{y}-OH

   und

   HO-(CH₂)ₓ-O-CO-R-CO-O-(CH₂)ₓ-OH

   in denen
   - R: einen Alkylen- bzw. Arylenrest mit 1 bis 10, vorzugsweise 2 bis 6, C-Atomen,
   - x =: 2 bis 6 und
   - y =: 3 bis 5
   bedeuten,
   z.B. δ-Hydroxybutyl-c-hydroxy-capronsäureester, ω-Hydroxyhexyl-γ-hydroxybuttersäureester, Adipinsäure-(β-hydroxyethyl)ester und Terephthalsäurebis(β-hydroxyethyl)ester.

Jedoch können als Kettenverlängerer auch Polyamine verwendet werden. Hierbei handelt es sich vorzugsweise um aliphatische oder cycloaliphatische Diamine, obwohl gegebenenfalls auch tri- oder höherfunktionelle Polyamine zur Erzielung eines gewissen Verzweigungsgrades mitverwendet werden können. Beispiele geeigneter aliphatischer Polyamine sind Ethylendiamin, Propylendiamin-1,2 und -1,3, Tetramethylendiamin-1,4, Hexamethylendiamin-1,6, das Isomerengemisch von 2,2,4- und 2,4,4-Trimethylhexamethylendiamin, 2-Methyl-pentamethylendiamin und Bis-(β-aminoethyl)-amin (Diethylentriamin).

Beispiele geeigneter cycloaliphatischer Polyamine sind:

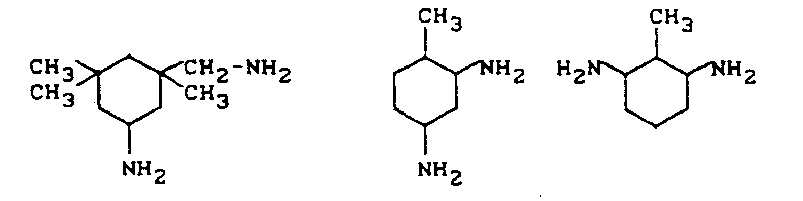

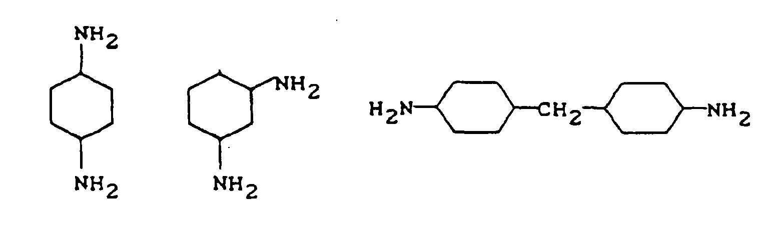

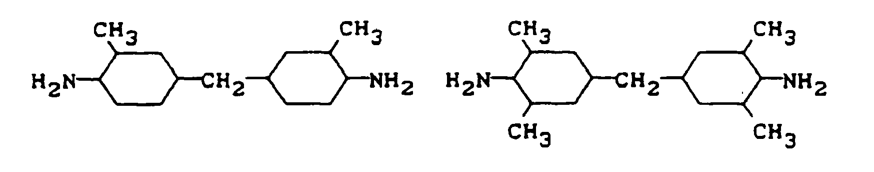

Auch araliphatische Polyamine, wie z.B. 1,3- und 1,4-Xylylendiamin oder α,α,α',α'-Tetramethyl-1,3- und -1,4-xylylendiamin lassen sich als Kettenverlängerungsmittel für die Herstellung der Polyurethane A) einsetzen.

Als Diamine im Sinne der Erfindung sind auch Hydrazin, Hydrazinhydrat und substituierte Hydrazine zu betrachten, wie z.B. Methylhydrazin, N,N'-Dimethylhydrazin und deren Homologe sowie Säuredihydrazide, z.B. Carbodihydrazid, Oxalsäuredihydrazid, die Dihydrazide von Malonsäure, Bernsteinsäure, Glutarsäure, Adipinsäure, β-Methyladipinsäure, Sebacinsäure, Hydracrylsäure und Terephthalsäure, Semicarbazido-alkylen-hydrazide, wie z.B. β-Semicarbazidopropionsäurehydrazid (DE-OS 17 70 591), Semicarbazidoalkylencarbazinester, wie z.B. 2-Semicarbazidoethylcarbazinester (DE-OS 19 18 504) oder auch Aminosemicarbazid-Verbindungen, wie z.B. β-Aminoethylsemicarbazido-carbonat (DE-OS 19 02 931).

Ionische Gruppen für die Polyurethane A) umfassen die Alkali- und Ammoniumcarboxylat- und -sulfonatgruppen sowie Ammoniumgruppen. Geeignete Einbaukomponenten für das Einbringen dieser Gruppen in die Polyurethane A) umfassen demzufolge z.B. Dihydroxycarbonsäuren, Diaminocarbonsäuren, Dihydroxysulfonsäuren sowie Diaminoalkylsulfonsäuren und ihre Salze wie z.B. Dimethylolpropionsäure, Ethylendiamin-β-ethyl-sulfonsäure, Ethylendiamin-propyl- oder -butylsulfonsäure, 1,2- oder 1,3-Propylendiamin-β- ethylsulfonsäure, Lysin, 3,5-Diaminobenzoesäure und deren Alkali- und/oder Ammoniumsalze; das Addukt von Natriumbisulfit an Buten-2-diol-1,4.

Zu den bevorzugten Einbaukomponenten für das Einbringen der ionischen Gruppen in die Polyurethane A) gehören insbesondere die Sulfonatgruppen aufweisenden aliphatischen Diole gemäß DE-OS 2 446 440 der Formel 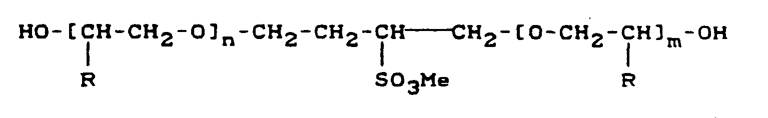 worin
- R: Wasserstoff oder einen organischen Rest mit 1 bis 8 Kohlenstoffatomen,
- m und n: Zahlen von 1 bis 10 und
- Me: Ammonium oder das Kation eines Alkalimetalls bedeuten.

Beispiele für (potentiell) kationische Aufbaukomponenten sind tertiäre Aminogruppen aufweisende Diole, wie z.B. N-Methyl-diethanolamin bzw. deren Protonierungs- oder Alkylierungsprodukte.

Ganz generell können als Einbaukomponenten für das Einbringen der ionischen Gruppen in die Polyurethane A) kationische und/oder anionische hydrophile difunktionelle Aufbaukomponenten der für die Herstellung von wäßrigen Polyurethandispersionen beschriebenen Art verwendet werden, wie beispielsweise (potentiell) ionische Gruppen aufweisende Dihydroxylverbindungen, -diamine oder -diisocyanate.

Die wäßrige Phase B) besteht zum größten Teil aus Wasser, kann aber auch organische Hilfslösungsmittel enthalten. Bevorzugte organische Hilfslöungsmittel umfassen beispielsweise Amide wie N,N-Dimethylformamid, N,N-Dimethylacetamid, N-Methylpyrrolidon, Ketone wie Methylethylketon, Diacetonalkohol, Cyclohexanon, Ether wie Ethylenglykolmonomethyl-, -ethyl- und -butylether und die entsprechenden Ether des Diethylenglykols, Propylenglykolmonomethyl- und -butylether, Ester wie Propylenglykoldiacetat und Dipropylenglykol-methyletheracetat. Die Menge der organischen Hilfslösungsmittel beträgt vorzugsweise bis zu 20, insbesondere bis zu 10 Gew.-%, bezogen auf wäßrige Phase B.

Das nach der Herstellung als Schmelze oder als Lösung vorliegende Polyurethan A) kann dann durch Vermischen mit Wasser und gegebenenfalls anschließendem Abdestillieren des Hilfslösungsmittels in eine wäßrige Dispersion überführt werden.

Grundsätzlich können die Polyurethane A) nach beliebigen Verfahren in wäßrige Dispersionen überführt werden. Zu erwähnen wären hier als Beispiele die Dispergierung ohne Verwendung von Lösern, z.B. durch Vermischung der Polyurethanschmelze mit Wasser in Geräten, die hohe Schergefälle erzeugen können, sowie die Verwendung von sehr geringen Mengen organischer Lösungsmittel zur Plastifizierung bei der Verarbeitung in den gleichen Geräten, weiterhin die Zuhilfenahme nicht mechanischer Dispergiermittel, wie Schallwellen extrem hoher Frequenz. Es können jedoch auch einfache Mischer, z.B. Rührkessel oder sogenannte Durchlaufmischer Verwendung finden, da die Polyurethan A) selbstdispergierbar sind.

Die Dispersionen können mit anderen anionischen oder nicht-ionischen Dispersionen verschnitten werden, wie z.B. mit Polyvinylacetat, Polyethylen-, Polystyrol-, Polybutadien-, Polyvinylchlorid-, Polyacrylat- und Copolymerisat-Dispersionen. Auch der Zusatz von an sich bekannten chemisch nicht fixierten vorzugsweise ionischen Emulgatoren ist möglich, jedoch selbstverständlich nicht erforderlich.

Schließlich können auch Füllstoffe, Weichmacher, Pigmente, Ruß- und Kieselsäuresole, Aluminium-, Ton-, Asbest-Dispersionen in die Dispersion eingearbeitet werden.

Zur Modifizierung bestimmter Eigenschaften der erfindungsgemäß herstellbaren Beschichtungen, wie Griff, Oberflächenglätte, können oligomere Polysiloxan-Segmente enthaltende Verbindungen mit mindestens zwei gegenüber Isocyanaten reaktionsfähigen Gruppen mit Molekulargewichten von 300 bis 6000, vorzugsweise von 500 bis 1500, eingesetzt werden. Bevorzugt werden difunktionelle Polysiloxane mit organofunktionellen Endgruppen eingesetzt, Diese Verbindungen weisen Struktureinheiten der Formel -O-Si-(R)₂- auf, wobei R für einen C₁-C₄-Alkyl- oder einen Phenylrest, vorzugsweise für einen Methylrest steht.

Die erfindungsgemäß verwendeten wäßrigen Beschichtungsmittel sind stabil, lager- und versandfähig und können zu beliebig späterem Zeitpunkt verarbeitet werden. Je nach der gewählten chemischen Zusammensetzung und dem Gehalt an Urethangruppen erhält man Beschichtungen mit unterschiedlichen Eigenschaften. So können weiche klebrige Schichten, thermoplastische und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100 bis 180°C, thermoplastisch verarbeiten, sofern sie nicht chemisch vernetzt sind.

Die erfindungsgemäß verwendeten Beschichtungsmittel sind zur Beschichtung bzw. zum Überziehen und zum Imprägnieren von gewebten und nichtgewebten Textilien, Leder, Papier, Hartfaser, Stroh, papierartigen Materialien, geeignet.

Vorzugsweise werden die Dispersionen bzw. Pasten dabei auf eine poröse Unterlage appliziert, die anschließend mit dem Fertigprodukt verbunden bleibt, wie z.B. gewebte oder nichtgewebte textile Gebilde bzw. Fasermatten, Filze oder Vliese, auch Papiervliese, Schaumstoff-Folien oder Spalt leder, die aufgrund ihrer Saugwirkung eine sofortige Verfestigung des Uberzuges bewirken. Anschließend wird bei erhöhter Temperatur getrocknet und gegebenenfalls verpreßt. Die Trocknung kann aber auch auf glatten porösen oder nichtporösen Materialien, z.B. Metall, Glas, Papier, Karton, keramischen Materialien, Stahlblech, Silikon-Kautschuk, Aluminiumfolie, erfolgen, wobei das fertige Flächengebilde anschließend abgehoben und als solches verwendet bzw. nach dem Umkehrverfahren durch Kleben, Flammkaschieren, Kalandern auf ein Substrat aufgebracht wird. Die Applikation nach dem Umkehrverfahren kann dabei zu einem beliebigen Zeitpunkt vorgenommen werden.

Die Applikation kann durch direktes Streichen auf das Substrat mit Hilfe von Rakelmessern, Walzen oder Drahtrakeln erfolgen. In der Regel werden mehrere Striche hintereinander, bevorzugt jedoch zwei, aufgebracht, so daß die Gesamtdicke der Beschichtung aus Grund- und Deckstrich(en) 10-100 µm, bevorzugt 20-60 µm, beträgt. Als Grundstrich kann auch eine zu einer mikroporösen Schicht auftrocknende Paste verwendet werden, wie es in DE-OS 2 020 153 beschrieben ist. Der anschließend aufgebrachte Deckstrich schützt den gesamten Verbund gegen mechanische Beanspruchung und Abrieb.

Das Aufbringen des Beschichtungsverbundes aus Grund- und Deckstrich ist aber auch nach dem sogenannten Umkehrverfahren möglich. Hierbei wird zunächst der Deckstrich auf einen Trennträger aufgetragen und getrocknet. Nach dem Auftragen eines zweiten Grund- oder Haftstriches wird das textile Substrat in die noch feuchte Schicht leicht eingedrückt. Nach dem Trocknen entsteht ein fester Verbund aus Beschichtung und Substrat, der vom Trennträger gelost wird und in seinem Aufbau weitgehend dem der vorher beschriebenen Direktbeschichtung entspricht.

Die erfindungsgemäß verwendeten Beschichtungsmittel führen zu Beschichtungen, bei denen in einem weiten Bereich der Schichtdicken eine überraschend geringe Abhängigkeit der Wasserdampfdurchlässigkeit von der Schichtdicke zu finden ist. Die Beschichtungen sind in Wasser nicht merklich quellbar.

Die außerordentlich wasserdampfdurchlässigen und absolut tropfenfesten Beschichtungen können auch aus wäßrigen Dispersionen hergestellt werden, die mit Pigmenten und/oder Farbstoffen versehen sind. Darüber hinaus können Hydrophobierungsmittel wie Fluorcarbonharze, Wachse und Öle zugesetzt werden, soweit dies die Wasserdampfdurchlässigkeit nicht übermäßig verschlechtert. Ferner ist der Zusatz von vernetzenden Additiven möglich, die eine Reaktion mit sich selbst oder dem Polyurethan A) erst in der fertigen Beschichtung, in der Regel durch Hitzeeinwirkung, eingehen. Zu diesen Verbindungen gehören (teilweise) veretherte Melaminformaldehydharze, z.B. Hexamethylolmelamin und gegebenenfalls blockierte Polyisocyanate mit 3 und mehr Isocyanatgruppen, z.B. auf Basis von Tris[isocyanatohexyl]isocyanurat und Tris[isocyanatohexyl]biuret.

Gegenstand der Erfindung ist also die Verwendung der erfindungsgemäßen Beschichtungsmittel zur Erzeugung wasserdampfdurchlässiger Beschichtungen, insbesondere auf flexiblen Substraten wie Textilien, Leder, Papier etc.

Die Prozentangaben der nachfolgenden Beispiele beziehen sich, sofern nicht anders angegeben, auf das Gewicht; Teile sind Gewichtsteile.

### Beispiele

### Verwendete Ausgangsmaterialien:

- Diol I:: Polycarbonat aus Hexandiol-1,6 und Tetraethylenglykol (Molverhältnis 1:1), OHZ 56, Molekulargewicht 2000. EOX-Gehalt: 49 %.
- Diol II:: Polycarbonat aus Hexandiol-1,6 und Tetraethylenglykol (Molverhältnis 2:5), OHZ 82, Molekulargewicht 1370. EOX-Gehalt: 65 %.
- EOX-Polyether III:: Monofunktionelles Polyethylenglykol OHZ 25, Molekulargewicht 2250.
- Diolsulfonat IV:: Additionsprodukt von NaHSO₃ an propoxyliertes Butendiol-1,4, OHZ ca. 260, Molekulargewicht 425.
- Diaminosulfonat V:: NH₂-CH₂CH₂-NH-CH₂CH₂-SO₃Na.

### Meßmethoden

Die Wasserdampfdurchlässigkeiten (WDD) werden nach den Maßgaben gemessen, wie sie in der Druckschrift DS 2109 TM1 der British Textile Technology Group, Manchester, England niedergelegt sind.

Die Wasserdichtheit (WS) wurde nach DIN 53 886 bestimmt.

Die Tropfenfestigkeit wurde durch Einwirkung (1 Minute) von Wassertropfen auf die Beschichtungsoberseite bestimmt. Wenn keine pustelartigen Veränderungen der Oberfläche auftreten, wird die Beschichtung als "absolut tropfenfest" bezeichnet.

### Beispiel 1

Herstellung einer aromatischen PUR-Dispersion für WDD-Schichten,

### Ansatz:

247,2 g Diol I
15,2 g EOX-Polyether III
18,0 g Diolsulfonat IV
200 g Aceton
84,6 g 4,4'-Diphenylmethandiisocyanat
17,0 g Hexandiisocyanat-1,6
18,0 g Acetonazin
600,0 g entsalztes Wasser
387 g Festkörper (Fk) enthalten 10,9 meq SO₃Na/100 g + 31,3 Gew.-% EOX in der Hauptkette.

### Durchführung:

In das bei 120°C entwässerte Gemisch der Komponenten I, III und IV rührt man bei 60°C das Aceton und das Gemisch der beiden Diisocyanate ein und läßt unter Rückfluß bis zur Erreichung eines konstanten NCO-Wertes reagieren. Nach Abkühlung auf 40°C rührt man in die NCO-Präpolymerlösung das Acetonazin ein. Anschließend läßt man unter gutem Rühren das Wasser zulaufen, rührt die entstandene Dispersion 2 Stunden nach und destilliert das Aceton ab.

Zur Bestimmung der Wasserdampfdurchlässigkeit (WDD) wird ein Film von 68 g/m² hergestellt. Zu diesem Zweck werden 100 g der Dispersion nach Einstellung des pH-Wertes 8 mittels conc. Ammoniak mit 1 % eines Polyacrylsäureverdickers auf Streichviskosität gebracht.

Die WDD beträgt 15.700 g/m²d.

Ein vergleichsweise aus einer PUR-Dispersion hergestellter Film von 56 g/m², die zum Aufbau anstatt des Diols I ein Polycarbonat aus Hexandiol-1,6 vom Molekulargewicht 2000 bei sonst gleicher Zusammensetzung enthält, hat nur eine WDD von 800 g/m²d.

Fk enthält 10,9 meq SO₃Na/100 g + 0 X EOX in der Hauptkette.

### Beispiel 2

Herstellung einer aliphatischen PUR-Dispersion für WDD-Schichten.

### Ansatz:

- 129,7 g: Polycarbonat aus Hexandiol-1,6, OHZ 56, Molekulargewicht 2000
- 114,0 g: Diol I
- 82,6 g: Dihydroxypolypropylenglykol, OHZ 56, Molekulargewicht 2000
- 5,0 g: Dimethylolpropionsäure
- 59,5 g: Hexandiisocyanat-1,6
- 2,2 g: Ethylendiamin
- 1,4 g: Hydrazinhydrat
- 5,6 g: Diaminosulfonat V
- 700,0 g: Aceton
- 600,0 g: Wasser

400 g Fk enthalten 7,4 meq SO₃Na/100 g + 14 Gew.-% EOX in der Hauptkette.

### Durchführung:

Polycarbonat, Diol I und Dihydroxypolypropylenglykol werden 1 Stunde bei 105°C in Vakuum entwässert. Bei 100°C fügt man die Dimethylolpropionsäure hinzu, bei 80°C das Hexandiisocyanat. Nach 3-stündiger Reaktion bei 95°C löst man das Präpolymere in Aceton. Bei 50°C läßt man das Gemisch der Kettenverlängerer aus Ethylendiamin, Hydrazinhydrat und Diaminosulfonat V, gelöst in 120 g Wasser, zutropfen; anschließend wird die restliche Menge (480 g) des Wassers eingerührt. Nach 2 1/2-stündigem Nachrühren bei 40°C wird das Aceton durch Destillation abgetrennt. Man erhält eine stabile 40%ige Dispersion.

Zur Bestimmung der Wasserdampfdurchlässigkeit wird nach Verdickung wie in Beispiel 1 ein Film von 53 g/m² hergestellt. Die WDD beträgt 9500 g/m²d.

Ein Vergleichsfilm aus einer PUR-Dispersion, die anstatt des Diols I entsprechend der molaren Menge mehr Polycarbonat aus Hexandiol-1,6 vom Molekulargewicht 2000 bei sonst identischer Zusammensetzung enthält, weist nur eine WDD von 900 g/m²d bei 58 g/m² Filmstärke auf.

Fk enthält 7,4 meq SO₃Na/100 g + 0 % EOX in der Hauptkette.

### Transferbeschichtung:

Auf einem handelsüblichen Trennpapier (^{R}Transcote VEM C1S der Fa. S.D. Warren) wird die unter Beispiel 1 beschriebene Dispersion zusammen mit einem Polyacrylsäure-Verdicker mittels einer Walzenrakel mit eingeschliffenem Rakelmesser derart aufgetragen, daß nach dem Trocknen bei 80 bis 150°C ein Film von 25 g/m² entsteht.

### Streichpaste:

- 100 Teile: 40%ige PUR-Dispersion von Beispiel 1
- 1 Teil: Polyacrylsäure-Verdicker
- 5 Teile: wäßrige Pigmentpräparation, mit Ammoniak auf pH 8 eingestellt.

Auf den getrockneten Film wird eine analog aus der PUR-Dispersion nach Beispiel 2 hergestellten Streichpaste (ohne Pigmentpräparation) als Haftstrich gerakelt. Nach dem Zukaschieren einer Baumwollware von ca. 140 g/m² Warengewicht und Trocknen des Beschichtungsaufbaus bei 80 bis 140°C erhält man einen WDD-Artikel von 200 g/m² Gesamtgewicht, Beschichtungsauflage Deck- und Haftstrich 60 g/m².

Der grifflich angenehm weiche Artikel hat bei 2000 mm WS eine WDD von 6600 g/m²d.

Ein Transferartikel aus den in den Beispielen 1 und 2 beschriebenen Vergleichsdispersionen ohne Diol I hat nach analogem Aufbau eine WDD von 750 g/m²d bei einer Beschichtungsauflage von 60 g/m².

### Beispiel 3

Herstellung einer aliphatischen PUR-Dispersion für WDD-Schichten.

### Ansatz:

- 245,5 g: Diol I
- 75,5 g: Dihydroxypolypropylenglykol, OHZ 56, Molekulargewicht 2000
- 12,7 g: EOX-Polyether III
- 3,1 g: Neopentylglykol
- 54,0 g: Hexandiisocyanat
- 2,3 g: Ethylendiamin
- 1,4 g: Hydrazinhydrat
- 4,7 g: Diaminosulfonat V
- 700,0 g: Aceton
- 600,0 g: Wasser

400 g FK enthalten 6,2 meq SO₃Na/100 g + 30,0 Gew.-% EOX in der Hauptkette.

### Durchführung:

Analog Beispiel 2 wird eine 40%ige Dispersion hergestellt. Zur Bestimmung der Wasserdampfdurchlässigkeit wird wie in Beispiel 1 verdickt und ein Film von 57 g/m² Gewicht erzeugt. Die WDD beträgt 3600 g/m²d.

Ein Vergleichsfilm aus einer PUR-Dispersion, die anstatt des Diols I bei sonst identischer Zusammensetzung das Polycarbonat aus Hexandiol-1,6 vom Molgewicht 2000 enthält, weist nur eine WDD von 750 g/m²d bei 59 g/m² Filmstärke auf.

### Transferbeschichtung:

Auf den in Beispiel 2 beschriebenen Deckstrich wird in analoger Weise wie dort beschrieben eine Streichpaste aus der Dispersion nach Beispiel 3 als Haftstrich gerakelt und das dort beschriebene Baumwollgewebe bei 140°C zukaschiert. Die Beschichtungsauflage aus Deck- und Haftstrich beträgt 60 g/m². Die WDD des Artikels liegt bei 6300 g/m²d bei 2000 mm WS.

### Beispiel 4

Herstellung einer aliphatischen PUR-Dispersion für WDD-Schichten.

### Ansatz:

- 131,4 g: Polycarbonat aus Hexandiol-1,6, OHZ 56, Molekulargewicht 2000
- 116,8 g: Diol I
- 19,7 g: EOX-Polyether III
- 6,2 g: Dimethylolpropionsäure
- 10,5 g: Butandiol-1,4
- 44,2 g: Hexandiisocyanat-1,6
- 58,3 g: Isophorondiisocyanat
- 3,5 g: Ethylendiamin
- 2,2 g: Hydrazinhydrat
- 7,2 g: Diaminosulfonat V
- 700,0 g: Aceton
- 600,0 g: Wasser

400 g Fk enthalten 9,5 meq SO₃Na + 14,3 Gew.-% EOX in der Hauptkette.

### Durchführung:

Analog Beispiel 2 wird aus diesen Bausteinen eine 40%ige PUR-Dispersion nach dem Aceton-Verfahren hergestellt.

Zur Bestimmung der Wasserdampfdurchlässigkeit wird nach Verdickung der Dispersion mit 3,0 g einer 30%igen Lösung von Poly-N-vinylpyrrolidon ein Film von 52 g/m² hergestellt, Die WDD beträgt 11.300 g/m²d.

Ein Vergleichsfilm aus einer PUR-Dispersion analog Beispiel 4, worin der Gehalt an Diol I durch die äquimolare Menge Hexandiol-Polycarbonat ersetzt ist, weist eine WDD von 1500 g/m²d bei einer Filmstärke von 48 g/m² auf.

Fk enthält 9,5 meq SO₃Na + 0 % EOX in der Hauptkette.

### Transferbeschichtung:

Die wie oben mit Poly-N-vinylpyrrolidon verdickte PUR-Dispersion wird nach Pigmentierung wie in Beispiel 2 zur Erzeugung eines Deckstrichs verwendet. Als Haftstrich dient die in Beispiel 3 beschriebene Streichpaste; als textiles Substrat wird ein Mischgewebe aus Baumwolle/Polyester von 100 g/m² Warengewicht eingesetzt. Die Beschichtungsauflage aus Deck- und Haftstrich beträgt 53 g/m². Man ermittelt eine WDD von 6900 g/m²d. Wird die Haftstrichpaste als sogenannter Dispersionsschlagschaum, Raumgewicht 500 g/l verwendet, beträgt die WDD bei 55 g/m² Gesamtauflage 7500 g/m²d bei 2000 mm WS.

Wird die in Beispiel 4 erwähnte Vergleichsdispersion als Deckstrich eingesetzt und die in Beispiel 3 erwähnte Vergleichsdispersion als Haftstrich, dann liegen die WDD-Werte bei 900 g/m²d (kompakt) bzw. 1150 g/m²d (geschäumt).

### Beispiel 5

Herstellung einer aliphatischen PUR-Dispersion für WDD-Schichten.

### Ansatz:

- 74,3 g: Hexandiol-1,6-polyadipat, OHZ 133, Molekulargewicht 840
- 132,2 g: Diol II
- 27,3 g: Diolsulfonat IV
- 6,5 g: Trimethylolpropan
- 33,8 g: N-Methylpyrrolidon
- 118,0 g: Dicyclohexylmethan-4,4'-diisocyanat
- 21,5 g: Hexandiisocyanat-1,6
- 20,2 g: Acetonazin
- 545,0 g: entsalztes Wasser

386 g Fk enthalten 16,7 meq SO₃Na/100 g + 22,3 Gew.-% EOX in der Hauptkette.

### Durchführung:

In das bei 100°C entwässerte Gemisch des Polyesters und der Komponenten II und IV rührt man bei 70°C das Trimethylolpropan, das N-Methylpyrrolidon und die beiden Isocyanate ein.

Man läßt bei 80°C bis zur Erreichung eines konstanten NCO-Wertes reagieren. Nach Abkühlung auf 75°C rührt man in die NCO-Präpolymerschmelze das Acetonazin ein. Anschließend läßt man unter gutem Rühren das Wasser zulaufen und rührt die entstandene Dispersion 3 Stunden nach.

Die PUR-Dispersion wird wie in Beispiel 1 mit einem Polyacrylsäure-Verdicker bei pH 8 auf Streichviskosität gebracht (8000 mPas/25°C).

Der daraus hergestellte Film von 56 g/m² Gewicht hat eine WDD von 13.800 g/m²d. Der Vergleichsfilm aus einer PUR-Dispersion analog Beispiel 5, worin der Gehalt an Diol II durch die äquimolare Menge Hexandiol-Polyadipat ersetzt ist, hat lediglich eine WDD von 400 g/m² bei 52 g/m² Filmstärke.

Fk (1040 g) enthält 19,2 meq SO₃Na/100 g + 0 Gew.-% EOX in der Hauptkette.

### Transferbeschichtung:

Auf einem handelsüblichen Trennpapier (^{R}Transcote VEM C1S der Firma S.D. Warren) werden die unter Beispielen 2 und 5 beschriebenen Dispersionen im Gewichtsverhältnis 1:1 zusammen mit einem Polyacrylsäure-Verdicker mittels einer Walzenrakel mit eingeschliffenem Rakelmesser derart aufgetragen, daß nach dem Trocknen bei 80 bis 150°C ein Film von 25 g/m² entsteht.

### Streichpaste:

- 50 Teile: 40%ige PUR-Dispersion von Beispiel 2
- 50 Teile: 40%ige PUR-Dispersion von Beispiel 5
- 1 Teil: Polyacrylsäure-Verdicker
- 5 Teile: wäßrige Pigmentpräparation, mit Ammoniak auf pH 8 eingestellt.

Auf den getrockneten Film wird eine analog aus der PUR-Dispersion nach Beispiel 2 hergestellten Streichpaste (ohne Pigmentpräparation) als Haftstrich gerakelt. Nach dem Zukaschieren einer Baumwollware von ca. 140 g/m² Warengewicht und Trocknen des Beschichtungsaufbaus bei 80 bis 140°C erhält man einen WDD-Artikel von 200 g/m² Gesamtgewicht, Beschichtungsauflage (Deck- und Haftstrich) 60 g/m².

Der grifflich angenehm weiche Artikel hat bei 2000 mm WS eine WDD von 10.600 g/m²d.

Bei Variation der Beschichtungsauflage von 50 g/m² bis 75 g/m² werden bei Wasserdichtigkeitswerten von 2000 mm WS gleich hohe Wasserdampfdurchlässigkeiten gemessen.

Ein Transferartikel aus den in den Beispielen 2 und 5 beschriebenen Vergleichsdispersionen ohne Diol I bzw. Diol II hat nach analogem Aufbau eine WDD von 1750 g/m² bei einer Beschichtungsauflage von 60 g/m².

Eine weitere Steigerung der Wasserdampfdurchlässigkeit kann bei Einsatz eines verschäumten Haftstriches statt des kompakten Haftstrichs nach Beispiel 2 erzielt werden.

Auf den getrockneten Film des Deckstrichs wird eine Schaumstrich-Paste in Auflagen von 40 bis 50 g/m² aufgetragen.

Schaumstrich-Paste (mechanische Verschäumung):
100 Teile 40%ige PUR-Dispersion von Beispiel 2
2,0 Teile ®STOKAL SR (Stockhausen, Verschäumungsmittel)
0,8 Teile ®STOKAL STA (Stockhausen, Schaumstabilisator)
1,5 Teile ®MIROX AM (Stockhausen, Verdickungsmittel)
X Teile Ammoniak, auf pH 8 bis 9
Litergewicht: ca. 500 g/l

Nach dem Zukaschieren einer Baumwollware von ca. 140 g/m² Warengewicht und Trocknen des Beschichtungsaufbaus bei 80 bis 140°C erhält man einen WDD-Artikel von 220 g/m² Gesamtgewicht, Beschichtungsauflage Deck- und geschäumter Haftstrich 80 g/m².

Der grifflich sehr angenehme weiche Artikel hat bei 2000 mm WS eine WDD von 13.500 g/m²d.

Die Beschichtungen weisen beim Auftragen von diskreten Wassertropfen absolute Tropfenfestigkeit auf und haben kaum Quellung in Wasser.

### Beispiel 6

Herstellung einer aliphatischen PUR-Dispersion für WDD-Schichten.

### Ansatz:

- 258,0 g: Polyadipat aus Hexandiol-1,6/Neopentylglykol (Molverhältnis 65:35), OHZ 66, Molekulargewicht 1700
- 69,2 g: Diol II
- 60,0 g: Hexandiisocyanat-1,6
- 2,4 g: Ethylendiamin
- 10,0 g: Diaminosulfonat V
- 700,0 g: Aceton
- 600,0 g: Wasser

400 g Fk enthalten 13,1 meq/100 g + 11,2 Gew.-% EOX in der Hauptkette.

### Durchführung:

Analog Beispiel 2 wird eine 40%ige Dispersion nach dem Aceton-Verfahren hergestellt. Die WDD eines Films von 63 g/m² beträgt 4400 g/m²d. Ein Film aus einer Dispersion, worin der Gehalt an Diol II durch die äquimolare Menge Polyadipat aus Hexandiol-1,6/Neopentylglykol ersetzt worden ist, liegt in der WDD bei 800 g/m²d (Filmgewicht 54 g/m²).

Fk (417 g) enthält 12,6 meq/100 g + 0 Gew.-% EOX in der Hauptkette.

### Beispiel 7

Herstellung einer aliphatischen PUR-Dispersion für WDD-Schichten.

### Ansatz:

- 239,0 g: Diol I
- 14,7 g: EOX-Polyether III
- 17,4 g: Diolsulfonat IV
- 111,5 g: Dicyclohexylmethan-4,4'-diisocyanat
- 17,4 g: Aceton-azin
- 600,0 g: entsalztes Wasser

388 g Fk enthalten 10,6 meq SO₃Na/100 g + 30,2 Gew.-% EOX in der Hauptkette.

### Durchführung:

Analog Beispiel 5 wird eine 40%ige Dispersion nach dem Aceton-azin-Verfahren hergestellt.

Ein Film von 56 g/m² Stärke weist einen WDD-Wert von 6900 g/m² auf. Ein Film aus einer PUR-Dispersion, die anstatt Diol I ein Polyadipat aus Hexandiol-1,6/Neopentylglykol (Molverhältnis 65:35) vom Molekulargewicht 2000 in äquimolarer Menge bei sonst gleicher Zusammensetzung enthält, hat dagegen nur eine WDD von 1200 g/m²d bei 60 g/m² Filmgewicht.

Fk (388 g) enthält 10,6 meq SO₃Na/100 g + 0 % EOX in der Hauptkette.

### Beispiel 8

Herstellung einer aliphatischen PUR-Dispersion für WDD-Schichten.

### Ansatz:

- 260,6 g: Diethylenglykol-polyadipat, OHZ 45, Molekulargewicht 2500
- 66,7 g: Dihydroxy-polypropylenglykol, OHZ 56, Molekulargewicht 2000
- 11,3 g: EOX-Polyether III
- 3,6 g: Dimethylolpropionsäure
- 50,4 g: Hexandiisocyanat-1,6
- 2,0 g: Ethylendiamin
- 1,3 g: Hydrazinhydrat
- 4,1 g: Diaminsulfonat V
- 700,0 g: Aceton
- 600,0 g: Wasser

400 g FK enthalten 5,4 meq SO₃Na/100 g + 26 Gew.-% EOX in der Hauptkette.

### Durchführung:

Analog Beispiel 2 wird eine 40%ige Dispersion nach dem Aceton-Verfahren hergestellt.

Ein Film aus der gemäß Beispiel 1 verdickten Dispersion hat bei 56 g/m² Filmgewicht eine WDD von 3600 g/m²d. Ersetzt man in diesem Beispiel das Diethylenglykolpolyadipat durch die äquimolare Menge von Hexandiol-1,6-polycarbonat (Molekulargewicht 2000), hat der daraus hergestellte Film von 58 g/m² Gewicht eine WDD von 900 g/m²d.

Fk (348 g ) enthält 6,2 meq SO₃Na/100 g + 0 % EOX in der Hauptkette.

### Beispiel 9

Herstellung einer aliphatischen PUR-Dispersion.

### Ansatz:

- 131,4 g: Polycarbonat aus Hexandiol-1,6, OHZ 56, Molekulargewicht 2000
- 116,8 g: Polycarbonat aus Triethylenglykol, OHZ 56, Molekulargewicht 2000
- 19,7 g: EOX-Polyether III
- 6,2 g: Dimethylolpropionsäure
- 10,5 g: Butandiol-1,4
- 44,2 g: Hexandiisocyanat-1,6
- 58,3 g: Isophorondiisocyanat
- 3,5 g: Ethylendiamin
- 2,2 g: Hydrazinhydrat
- 7,2 g: Diaminosulfonat V
- 750,0 g: Aceton
- 600,0 g: Wasser

400 g Fk enthalten 9,5 meq SO₃Na/100 g + 22 Gew.-% EOX in der Hauptkette.

### Durchführung:

Analog Beispiel 2 wird eine 40%ige Dispersion nach dem Aceton-Verfahren hergestellt.

Ein Film aus der gemäß Beispiel 1 verdickten Dispersion hat bei 54 g/m² Filmgewicht eine WDD von 10.500 g/m²d.

Ersetzt man das Polycarbonat aus Triethylenglykol durch die äquimolare Menge des Polycarbonats aus Hexandiol-1,6, dann erhält man aus dieser Dispersion einen Film mit einer WDD von 1500 g/m²d bei 48 g/m² Filmgewicht.

Fk (400 g) enthält 9,5 meq SO₃Na/100 g + 0 % EOX in der Hauptkette.

### Beispiel 10

Herstellung einer aliphatischen PUR-Dispersion für WDD-Schichten.

### Ansatz:

- 60,9 g: Polycarbonat aus Hexandiol-1,6, OHZ 56, Molekulargewicht 2000
- 207,1 g: Diol I
- 6,5 g: Dimethylolpropionsäure
- 11,0 g: Butandiol-1,4
- 43,5 g: Hexandiisocyanat-1,6
- 57,5 g: Isophorondiisocyanat
- 3,7 g: Ethylendiamin
- 3,3 g: Hydrazinhydrat
- 7,5 g: Diaminosulfonat V
- 700,0 g: Aceton
- 600,0 g: Wasser

400 g Fk enthalten 9,9 meq SO₃Na/100 g + 25,4 Gew.-% EOX in der Hauptkette.

### Durchführung:

Analog Beispiel 2 wird aus diesen Bausteinen eine 40%ige PUR-Dispersion nach dem Aceton-Verfahren hergestellt.

Zur Bestimmung der Wasserdampfdurchlässigkeit wird nach Verdickung der Dispersion mit 3,0 g einer 30%igen Lösung von Poly-N-vinylpyrrolidon ein Film von 52 g/m² hergestellt. Die WDD beträgt 12.300 g/m²d.

Ein Vergleichsfilm aus einer PUR-Dispersion analog Beispiel 10, ohne den Gehalt an Diol I, aber mit der äquimolaren Menge des Polycarbonats aus Hexandiol bei sonst identischer Zusammensetzung, weist eine WDD von 1500 g/m²d bei einer Filmstarke von 48 g/m² auf.

### Transferbeschichtung:

Die wie oben mit Poly-N-vinylpyrrolidon verdickte PUR-Dispersion wird nach Pigmentierung wie in Beispiel 2 zur Erzeugung eines Deckstrichs verwendet. Als Haftstrich dient die in Beispiel 2 beschriebene Streichpaste; als textiles Substrat wird ein Mischgewebe aus Baumwolle/Polyester von 100 g/m² Warengewicht eingesetzt. Die Beschichtungsauflage aus Deck- und Haftstrich beträgt 53 g/m². Man ermittelt eine WDD von 11100 g/m²d. Wird die Haftstrichpaste als sogenannter Dispersionsschlagschaum, Raumgewicht 500 g/l verwendet, beträgt die WDD bei 55 g/m² Gesamtauflage 14500 g/m²d.

Die Beschichtung sämtlicher erfindungsgemäßer Beispiele sind tropfenfest und zeigen kaum Quellung in Wasser.

Wird die in Beispiel 10 erwähnte Vergleichsdispersion als Deckstrich eingesetzt und die in Beispiel 2 erwähnte Vergleichsdispersion als Haftstrich, dann liegen die WDD-Werte bei 800 g/m²d (kompakt) bzw. 950 g/m²d (geschäumt).

## Patentansprüche

1. Verwendung wäßriger Dispersionen aus
A) einem Polyurethan auf Basis von Polyisocyanat, Diol mit mittleren Molekulargewichten von 350 bis 5000 und Kettenverlängerungsmittel mit Molekulargewichten von 32 bis 349, wobei das Polyurethan A) ionische Gruppen in einer Menge von 0,1 bis 75 meq pro 100 g Polyurethan A) und über 6 bis 50 Gew.-%, bezogen auf Polyurethan A), in die Hauptkette eingebaute Polyethylenoxideinheiten (-CH₂-CH₂O)ₙ- mit einer Sequenzlänge n von 3 bis 50 enthält, und
B) wäßriger Phase in einer Menge von 30 bis 80 Gew.-%, bezogen auf die Summe A+B,
zur Erzeugung porenfreier wasserdampfdurchlässiger Beschichtungen auf Textilien, Leder oder Papier.

2. Verwendung nach Anspruch 1, worin das Polyurethan A) ionische Gruppen in einer Menge von 0,5 bis 40 meq pro 100 g Polyurethan A) enthält.

3. Verwendung nach Anspruch 1, worin das Polyurethan A) über 10 bis 40 Gew.-%, bezogen auf Polyurethan A), in die Hauptkette eingebaute Polyethylenoxideinheiten enthält.

4. Verwendung nach Anspruch 1, worin das Polyurethan A) über 10 bis 35 Gew.-%, bezogen auf Polyurethan A), in die Hauptkette eingebaute Polyethylenoxideinheiten enthält.

5. Verwendung nach Anspruch 1, worin die Sequenzlänge n der Polyethylenoxideinheiten 3 bis 12 betragen.

## Claims

1. Use of aqueous dispersions prepared from
A) a polyurethane based on polyisocyanate, diol having average molecular weights of from 350 to 5000 and chain extenders having molecular weights of from 32 to 349, wherein the polyurethane A) contains ionic groups in a quantity of 0.1 to 75 meq per 100 g of polyurethane A) and from above 6 to 50 wt.%, relative to polyurethane A), of polyethylene oxide units (-CH₂-CH₂O)ₙ- having a sequence length n of 3 to 50 incorporated into the main chain, and
B) an aqueous phase in a quantity of from 30 to 80 wt.%, relative to the sum of A+B,
for the production of pore-free coatings permeable to water vapour on textiles, leather or paper.

2. Use according to claim 1, in which the polyurethane A) contains ionic groups in a quantity of from 0.5 to 40 meq per 100 g of polyurethane A).

3. Use according to claim 1, in which the polyurethane A) contains from above 10 to 40 wt.%, relative to polyurethane A), of polyethylene oxide units incorporated into the main chain.

4. Use according to claim 1, in which the polyurethane A) contains from above 10 to 35 wt.%, relative to polyurethane A), of polyethylene oxide units incorporated into the main chain.

5. Use according to claim 1, in which the sequence length n of the polyethylene oxide units is from 3 to 12.

## Revendications

1. Utilisation de dispersions aqueuses de
(A) un polyuréthane à base d'un polyisocyanate, d'un diol de poids moléculaires moyens de 350 à 5 000 et d'agents d'allongement des chaînes de poids moléculaires de 32 à 349, le polyuréthane A) contenant des groupes ioniques en quantité de 0,1 à 75 milliéquivalents pour 100 g de polyuréthane A) et des unités de poly(oxyde d'éthylène) (-CH₂-CH₂O)ₙ- incorporées dans la chaîne principale à une longueur de séquence n de 3 à 50, en quantité allant de plus de 6 et jusqu'à 50 % du poids du polyuréthane A), et
(B) une phase aqueuse en quantité de 30 à 80 % du poids du total de A+B, pour la production de revêtements non poreux mais perméables à la vapeur d'eau sur textiles, cuir ou papier.

2. Utilisation selon la revendication 1, dans laquelle le polyuréthane A) contient des groupes ioniques en quantité de 0,5 à 40 milliéquivalents pour 100 g de polyuréthane A).

3. Utilisation selon la revendication 1, dans laquelle le polyuréthane A) contient plus de 10 et jusqu'à 40 % en poids, par rapport au polyuréthane A), d'unités de poly(oxyde d'éthylène) incorporées dans la chaîne principale.

4. Utilisation selon la revendication 1, dans laquelle le polyuréthane A) contient plus de 10 et jusqu'à 35 % en poids, par rapport au polyuréthane A), d'unités de poly(oxyde d'éthylène) incorporées dans la chaîne principale.

5. Utilisation selon la revendication 1, dans laquelle la longueur de séquence n des unités de poly(oxyde d'éthylène) va de 3 à 12.
